# EUROPÄISCHE PATENTSCHRIFT

(11) **EP 1 806 858 B1**
(45) Veröffentlichungstag und Bekanntmachung des Hinweises auf die Patenterteilung: **27.08.2008**
(21) Anmeldenummer: 06026853.9
(22) Anmeldetag: 23.12.2006
(51) Int. Cl.: H04B 10/10, H04B 10/28

(54) **System zur optischen Freiraum-Datenübertragung zwischen Kommunikationspartnern**
System for free space data transmission between comunication terminals
Système pour transmission d'espace libre de données entre des terminaux de communication

(30) Priorität: 10.01.2006 DE 10601424
(43) Veröffentlichungstag der Anmeldung: 11.07.2007
(73) Patentinhaber: Deutsches Zentrum für Luft- und Raumfahrt e.V., 51147 Köln (DE)
(72) Erfinder: Giggenbach, Dirk, Dr., 86932 Pürgen (DE)
(74) Vertreter: von Kirschbaum, Albrecht

(56) Entgegenhaltungen:
- EP-A- 1 162 770
- WO-A-20/04038963
- GB-A- 2 127 643

## Beschreibung

Die vorliegende Erfindung betrifft ein System zur optischen Freiraum-Datenübertragung zwischen Kommunikationspartnern, die zum Aussenden und Empfangen eines mit Daten modulierten optischen Strahls jeweils ein in einem Gehäuse untergebrachtes, mit einer Wellenlänge größer als 1200 nm arbeitendes, bewegliches Terminal aufweisen, das zur Ausrichtungseinstellung der Strahlrichtung für den Sende- und Empfangspfad mit einer Einrichtung zur Durchführung eines integrierten, autonomen Pointing- und Tracking-Verfahrens ausgelegt ist, wobei zwischen kommunizierenden Terminals eine Telemetrie-Kommunikation vorgesehen ist.

Zur Kommunikation zwischen verteilten Truppen- oder Polizeieinheiten, die teils mit Fahrzeugen ausgerüstet sein können, bedarf es flexibler, gegebenenfalls mobiler Kommunikationsverbindungen, die wiederum nicht entdeckt und abgehört werden dürfen. Hierbei besteht zunehmend ein starker Bedarf an hohen Datenübertragungsraten, da auch Videobilder in Echtzeit, also ohne zeitlichen und qualitativen Codierungsverlust, übertragen werden sollen.

Gegenwärtig werden derartige Kommunikationen durch Mikrowellen-Richtfunkstrecken oder stationär ausgerichtete optische Freiraum(FSO; Free-Space Optics)-Verbindungen bewältigt.

Mikrowellen-Richtfunkverbindungen bieten in nachteiliger Weise nur begrenzte Datenübertragungsraten, mit denen die geforderten hochauflösenden Videodaten mit einem Datenaufkommen von ca. 1 Gbps pro Kanal nicht übertragen werden können. Sie sind also hinsichtlich der Übertragungsdatenraten stark beschränkt. Zudem können Mikrowellen-Richtfunkverbindungen durch einfache Sensoren auf Grund ihres großen Abstrahlkegels leicht detektiert und damit auch zerstört oder zumindest abgehört werden. Letzteres wird zwar durch chiffrierende Codierung erschwert. Derartige Gegenmaßnahmen sind aber niemals auf Dauer abhörsicher.

Weiterhin sind der Aufbau und die Bedienung des für Mikrowellen-Richtfunk erforderlichen Kommunikationsequipments technisch anspruchsvoll und müssen durch hochspezialisiertes Fachpersonal durchgeführt werden. Außerdem ist die Ausrüstung voluminös, da schon der Durchmesser der einzusetzenden Richtantenne einige Dezimeter beträgt, und schwer, da schwere Elektronikboxen mit hohem Leistungsverbrauch erforderlich sind. Die große und schwere Richtfunkausrüstung erlaubt daher keinen schnellen, mobilen oder teilstationären Einsatz.

Bereits existierende stationär ausgerichtete optische Freistrahl-Kommunikationssysteme bieten wegen ihrer stationären Installationsform nicht die für nomadischen Einsatz erforderliche Flexibilität und Robustheit.

Unter "teilstationärem" bzw. "nomadischem" Einsatz wird hier der kurzzeitige stationäre Einsatz ohne Ausrichte-/Einrichtearbeiten mit Verbindungsaufbau innerhalb weniger Sekunden verstanden, so dass praktisch keinerlei Installationszeiten anfallen.

In der am 20.7.2006 veröffentlichten deutschen Patentanmeldung 10 2005 000 937.9 ist bereits ein System zur bidirektionalen optischen Vollduplex-Freiraum-Datenübertragung zwischen mobilen Kommunikationspartnern mit Terminal vorgeschlagen. Das Terminal jedes Kommunikationspartners ist für den Sende- und Empfangssignalweg mit einer gemeinsamen Teleskopapertur und mit einer Einrichtung zur Ausrichtungseinstellung versehen. Im Terminal jedes Kommunikationspartners sind für den Sendesignalträger und den Empfangssignalträger zwei nahe beieinander liegende Wellenlängen wahlweise zur Verfügung gestellt und WDM(Wavelength Division Multiplexing)-Komponenten vorgesehen, welche das Übertragen von mehreren modulierten Laser-Signalen von unterschiedlichen Wellenlängen über die gleiche Glasfaser erlauben, so dass wahlweise verschiedene Wellenlängen zum Senden und Empfangen auswählbar sind.

Die WDM-Komponenten bewirken auch, dass der Empfangspfad im Terminal für das von diesem Terminal ausgesendete Licht blind geschaltet ist, wobei vor der Aufnahme der optischen Freiraum-Datenkommunikation die jeweiligen Sende- und Empfangswellenlängen der beteiligten Terminals verhandelt worden sind. Dieses vorgeschlagene System soll die Realisierung von optischen Richtfunkstrecken, d.h. optischen Freistrahl-Kommunikationsverbindungen, zur hochratigen Kommunikation zwischen Flugzeugen ziviler oder militärischer Art oder aller anderen Arten von mobilen Kommunikationspartnern, wie z.B. Landfahrzeuge, Luftfahrzeuge, Schiffe, Satelliten, Raumsonden, ermöglichen.

Die notwendige scharfe Bündelung des Sendesignalstrahls erfordert allerdings eine präzise Richtungsregelung dieses Strahls ("PAT"; Pointing, Acquisition, and Tracking; Suchen, Akquisition und Nachführung). Strahldivergenzwinkel im Bereich weniger tausendstel Grad sind hier typisch. Hiervon betroffen sind zunächst das Auffinden des Kommunikationspartners, dann die Regelung der Richtung des ausgehenden Sendesignalstrahles und auch das Nachführen des Empfangsstrahles, also quasi die Blickrichtung. Insbesondere bei avionischen Trägerplattformen erfordern die störenden Beeinflussungen infolge von Vibrationen durch Antriebsaggregate, von Schwankungen auf Grund von Luftturbulenzen und von Brechungsindex-Turbulenzen auf Grund atmosphärischer Effekte eine sehr robuste und schnelle Strahlregelung.

Ein Nachteil bei mobilen optischen Kommunikationsverbindungen ist das Überstrahlen des Empfänger-Pfades durch das eigene Sendelicht bzw. das eigene Beacon-Signal. Besonders nachteilig wirkt sich die teilweise Rückstreuung bei bidirektionaler Voll-Duplex-Kommunikation aus.

Eine bekannte Abhilfe dieses Nachteils besteht darin, die Kommunikation auf Halb-Duplex-Betrieb, also abwechselndes Senden und Empfangen, zu reduzieren.

Ein optisches Freiraum-Datenkommunikationssystem mit mobilen optischen Transceivern, die gemeinsame optische Einrichtungen im Sendepfad und Empfangspfad benutzen, ist aus US 2004/0208595 A1 bekannt. Auch der vorhandene Beacon im Transceiver verwendet einen Teil dieser optischen Einrichtungen. Ein Trackingsystem sorgt für die Ausrichtung der optischen Einrichtungen des jeweiligen Transceivers auf einen anderen Transceiver, indem ein Korrekturvektor erzeugt wird, der auf das einfallende Signal vom Partner-Transceiver reagiert. Es wird hier sendeseitig und empfangsseitig mit Licht von gleicher Wellenlänge gearbeitet, wobei die Trennung von Empfangssignalweg und Sendesignalweg mittels eines Duplexers vorgenommen wird.

Bei einem aus US 2004/0081466 A1 bekannten optischen Freiraum-Datenkommunikationssystem ist der Überstrahlungseffekt des eigenen Empfangspfades dadurch beseitigt, dass in den Sendepfaden und Empfangspfaden der mobilen Transceiver unterschiedliche Trägerwellenlängen verwendet werden. Dieses System ist allerdings wegen des umfangreichen Multiplexaufwandes an Deflektorstapeln zur Signaltrennung für einen portablen Gebrauch, wie er beim Truppen- oder Polizeieinsatz gefordert wird, nicht geeignet.

Ein Voll-Duplex-Breitband-Laser-Freiraum-Kommunikationssystem mit unterschiedlichen Wellenlängen des Trägers für das jeweils beim Transceiver ausgesendete bzw. das beim Transceiver empfangene Signal ist auch aus US 6 285 476 bekannt. Dieses System ist aber nicht für Ausrichtung auf mobile Kommunikationspartner ausgelegt.

Aus US 2004/0042798 A1 ist ein optischer Freiraum-Transceiver bekannt, dessen Signalsender ein Kommunikationssignal aussendet und eine Sendeoptik mit einem Sendeteleskop aufweist. Der Transceiver umfasst darüber hinaus für seinen Signalempfänger eine Empfangsoptik, die ein Empfangsteleskop zum Empfangen eines ankommenden Kommunikationssignals enthält. Ein zweiachsiger Kippspiegel koppelt den Signalsender an die Sendeoptik, so dass das abgehende Kommunikationssignal über das Sendeteleskop übertragen wird. Der gleiche zweiachsige Kippspiegel koppelt auch die Empfangsoptik an den Signalempfänger, so dass das eingehende Kommunikationssignal durch den Signalempfänger empfangen wird. Die Winkelausrichtung des zweiachsigen Kippspiegels steuert zugleich die Sende- und Empfangsausrichtung des Sende- bzw. Empfangsteleskops. Dieser bekannte optische Transceiver mit zwei getrennten Aperturen für den Sende- und Empfangspfad ist jedoch für einen mobilen Einsatz nicht geeignet, da sein erfassbarer Raumwinkelbereich (Field-of-Regard; FoR) nur dazu ausreicht, Bewegungen von stationär angebrachten Strukturen zu kompensieren, an denen er befestigt ist, z.B. an Gebäuden, Türmen oder Stangen. Die Winkelstellung des zweiachsigen Kippspiegels und damit zugleich die Winkelausrichtung der beiden Teleskope werden von einem optischen Positionssensor gesteuert, der auf ein von einem anderen Transceiver ausgesendetes Telemetriesignal reagiert, das durch einen besonderen codemodulierten elektrischen Unterträger gebildet wird.

Der vorliegenden Erfindung liegt nunmehr die Aufgabe zu Grunde, unter Verwendung von in kleinen Gehäusen untergebrachten und damit leicht mitführbaren optischen Terminals ein System zur optischen Freiraum-Kommunikation zwischen räumlich verteilten Truppen- oder Polizeieinheiten zu schaffen, die zum Teil oder alle mit Fahrzeugen ausgerüstet sind, wobei flexible bzw. gegebenenfalls mobile Kommunikationsverbindungen, die weder entdeckt noch abgehört werden können, unerlässlich gefordert sind und der wegen der verlangten Echtzeitübertragung von Videobildern ohne zeitlichen und qualitativen Codierungsverlust zunehmend starke Bedarf an hohen Datenübertragungsraten voll erfüllt werden kann.

Gemäß der vorliegenden Erfindung, die sich auf ein System der eingangs genannten Art bezieht, wird diese Aufgabe in vorteilhafter Weise dadurch gelöst, dass folgende Auslegung der Mechanik und Optik der für den Sende- und Empfangspfad jeweils eine gemeinsame Terminalapertur aufweisenden, von mobilen Kommunikationspartnern mitführbaren Terminals vorgesehen ist:
zwei konzentrische Kugeln, von denen die innere Kugel mittels zweier in Antriebslagern orthogonal angeordneter Drehräder oder mittels anders ausgebildeter Drehmechaniken in beiden Drehachsen gegenüber der äußeren Kugel rotierbar ist und von denen die äußere Kugel nur für die Kommunikationswellenlänge transparent ist, der restliche Spektralbereich dagegen nicht transmittiert wird;
ein zur Durchführung des Pointing- und Tracking-Verfahrens und zusätzlich eines Akquisitionsverfahrens vorgesehener "PAT"(Pointing, Acquisition, and Tracking)-Such-, Akquisitions- und Strahlverfolgungssensor in einem Randbereich innerhalb der inneren Kugel und dazu diametral gegenüberliegend eine Aperturlinse,
und dass die Telemetrie-Kommunikation zwischen kommunizierenden Terminals in den Nutzer-Datenstrom eingebunden ist und bei Auftreten von Leistungsfading Gegenmaßnahmen abstimmt.

Die für das spezielle Anwendungsszenario geforderte flexible Kommunikation wird hier durch kleine optische Übertragungsterminals erreicht, welche ihre Feinausrichtung und Übertragungstelemetrie autonom durchführen. Die erzielbaren Datenübertragungsraten sind durch Mikrowellen-Richtfunk technisch nicht realisierbar und können mit denjenigen von stationären FSO(Free-Space-Optics; Freiraumoptik)-Verbindungen konkurrieren, wobei letztere nicht die für das hier zu Grunde liegende Anwendungsszenario erforderliche Flexibilität, Robustheit und Unkompliziertheit im Einsatz mitbringen.

Die Wellenlänge des Trägers beträgt bei den im erfindungsgemäßen System verwendeten Terminals über 1200 nm. In besonders vorteilhafter Weise beträgt die Wellenlänge etwa 1550 nm, um existierende und qualifizierte Komponenten aus der terrestrischen Glasfaserkommunikationstechnik verwenden zu können. Wellenlängen über 1200 nm gewährleisten Augensicherheit für die Nutzer, auch bei Sendeleistungen, die 1 mW übersteigen. Auf Grund der geringen Durchlässigkeit des Augen-Glaskörpers für Wellenlängen über 1200 nm können z.B. bei einer Wellenlänge von 1550 nm Sendeleistungen bis zu 1 W bei entsprechender technischer Auslegung des Sendestrahlprofils gefahrlos verwendet werden.

Die Wellenlängen im MIR (Mid-Infrared; ca. 1 µm bis 2 µm) bieten zudem den Vorteil, dass hier weniger vor allem von der Sonne herrührendes Hintergrundlicht vorhanden ist, womit die Datenübertragung und das integrierte Such-, Akquisitions- und Strahlverfolgungsverfahren ("PAT"; Pointing, Acquisition, and Tracking) sehr viel weniger durch Hintergrundlicht gestört werden, als dies z.B. bei der auf Silizium-Technologie basierenden Kommunikationstechnik im NIR (Near-Infrared; ca. 750 nm bis 1000 nm) der Fall ist. Das Sonnenemissionsspektrum verhält sich, vereinfacht ausgedrückt, wie das Spektrum eines "Schwarzen Strahlers" mit dem Peak bei etwa 580 nm. Bei 1550 nm ist daher etwa um eine Größenordnung weniger Hintergrundlicht vorhanden als bei 800 nm.

Die erreichbaren Datenübertragungsraten betragen hier mehrere Gbps, z.B. 2,5 Gbps oder 10 Gbps, und basieren auf dem aus der terrestrischen Glasfaserkommunikation stammenden optischen Kommunikationsstandard.

Die exakte Ausrichtung der beiden miteinander kommunizierenden Terminals mit Genauigkeiten von wenigen 100 µrad und darunter ist essentiell für die Datenübertragungsleistung und die Abhörsicherheit. Diese Ausrichtung geschieht daher beim System nach der vorliegenden Erfindung mittels integrierter Such-, Akquisitions- und Strahlverfolgungsverfahren, dem sogenannten "PAT" (Pointing, Acquisition, and Tracking).

Die beim System nach der vorliegenden Erfindung benutzten "PAT"-Verfahren können in vorteilhafter Weise auf bildgebenden Sensoren, z.B. Kamera-Chips, oder auf Mehrsegment-Sensoren, z.B. Vierquadranten-Sensoren, beruhen. Mehrsegment-Sensoren bieten bei entsprechend optimierter Bauform, eventuell mit mehr als vier Segmenten zur Erzielung einer besseren Auflösung des zu betrachtenden Raumwinkels, die Basis für eine robuste und kostengünstige Ausrichtungsregelung. Für diese "PAT"-Regelung wird in vorteilhafter Weise das gleiche Signal wie für die Datenübertragung verwendet, entweder indem ein Teil des Empfangslichtes vom Datenempfangspfad zum "PAT"-Pfad ausgekoppelt wird oder indem für Datenempfang und "PAT" die gleichen Sensoren verwendet werden.

Ein Auskoppeln und ein separater PAT-Pfad erübrigen sich, wenn der Datenempfangssensor überstrahlt wird und die seitlich daneben angeordneten Tracking-Sensoren mit dem erforderlichen Lichtsignal bestrahlt werden. Ebenfalls zur Optimierung des Trackings ist es dienlich, die Empfangsleistung des Datenempfangssensors zu überwachen, um so Signalfading aufgrund von weiter hinten erläuterten Effekten, aber auch aufgrund Ausrichtungsfehler zu beobachten und zur Optimierung des Trackings zu verwerten. Auf Grund der bei den hohen hier angestrebten Datenübertragungsraten zwingend erforderlichen höheren Empfangsintensität, welche in etwa linear mit der Datenübertragungsrate skaliert ist, z.B. typisch 500 nW für 2,5 Gbps, steht für das Tracking automatisch eine hohe optische Signalleistung zur Verfügung.

Die Kommunikation im System nach der vorliegenden Erfindung erfolgt entweder mittels synchroner, kontinuierlicher bidirektionaler Datenströme oder vorteilhafter durch asynchrone, paketierte Daten. In letzterem Fall kann die Kommunikation im Halb-Duplex-Verfahren, also abwechselnd und nicht gleichzeitig in beiden Richtungen, erfolgen, was den Vorteil hat, dass die gleichen Wellenlängen für beide Richtungen verwendet werden können, ohne dass der eigene Empfänger-Pfad durch das eigene Sendelicht überstrahlt, d.h. geblendet, wird.

Es halbiert sich beim Halb-Duplex-Verfahren zwar die mittlere Datenübertragungsrate, was aber durch die hohen möglichen Datenübertragungsraten von mehreren Gbps kompensiert werden kann. Zudem halbiert sich wiederum der mittlere Sendeleistungsbedarf. Der Wechsel der Übertragungsrichtung beim Halb-Duplex-Verfahren kann auch asymmetrisch gestaltet werden, also mit Senderichtungsperioden und Empfangsrichtungsperioden eines Terminals von ungleicher Dauer, um sich an die Bedürfnisse einer Kommunikationsanwendung, wie beispielsweise unidirektionales Video-Streaming, anzupassen.

Der Wechsel in der Übertragungsrichtung hat beim Halb-Duplex-Verfahren so schnell zu erfolgen, dass der "PAT"-Sensor immer ausreichend mit einem "PAT"-Signal versorgt wird. Die einzuhaltende "PAT"-Bandbreite wird dabei durch die Vibrationen und Lageungenauigkeiten der das Terminal tragenden Trägerplattform, z.B. eines Fahrzeugs oder einer Person, und durch die atmosphärischen Brechungsindexstörungen bestimmt. Typischerweise ist hier maximal von einer Störungsbandbreite von wenigen kHz auszugehen, womit eine Übertragungsrichtung-Wechselfrequenz im Halb-Duplex-Verfahren von über 10-kHz erforderlich ist. Derartige Randbedingungen sind mit den heutzutage üblichen Übertragungsprotokollen leicht einzuhalten.

Das beim System nach der vorliegenden Erfindung anzuwendende "PAT"-Verfahren kann dann in vorteilhafter Weise auf einen modulierten Beacon ausgelegt werden, d.h. dass das Tracking auf eine Blinkfrequenz des Terminals des jeweiligen Kommunikationspartners nachregelt und nicht auf ein kontinuierliches Signal. Die Blinkfrequenz wäre dann die Halb-Duplex-Wechselfrequenz. Dies hat zudem den Vorteil, dass Hintergundlichteffekte, welche ansonsten die Akquisition und das Tracking extrem stören können, ausgeblendet werden können und der "PAT"-Sensor damit nur für das Signal vom Terminal des betreffenden Kommunikationspartners empfindlich ist.

Weiterhin ist beim System nach der vorliegenden Erfindung zur Optimierung der Übertragung auch unter Empfangsleistungsfading, z.B. langsam infolge von atmosphärischer Dämpfung oder schnell infolge von atmosphärischer Brechungsindexturbulenz und Trägerplattformvibrationen, wie z.B. Erschütterungen auf dem Fahrzeug oder Flugzeug, eine ebenfalls paketorientierte und in den Nutzer-Datenstrom einzuflechtende Telemetrie-Kommunikation zwischen den beiden bei einer Kommunikationsverbindung beteiligten Terminals vorgesehen. Mittels dieser Telemetrie-Kommunikation können bei Leistungsfading auf einfache Weise entsprechende Gegenmaßnahmen abgestimmt werden.

Es können folgende Gegenmaßnahmen bei Leistungsfading identifiziert werden, ohne dass hier ein Anspruch auf Vollständigkeit besteht:
- Reduzierung der Kanaldatenrate (Übertragungsbandbreite)
- Erhöhung des Codierungsoverheads zur Datensicherung;
- Kurzzeitige Erhöhung der Sendeleistung, soweit dies die jeweils vorhandenen Reserven erlauben; und
- Widerholungsanforderungen für verloren gegangene Datenpakete, wie beim Standard-Kommunikationsprotokoll TCP (Transport Control Protocol) üblich.

Weitere an sich bekannte Maßnahmen zur Reduzierung des Bit-Fadings sind typischerweise Sender-Diversität, Empfänger-Diversität oder Wellenlängendiversität. Diese bekannten Diversitätsmaßnahmen sind aber in der hier verfolgten Anwendung wegen inakzeptablem Platzbedarf und/oder hoher Komplexität nicht anwendbar. Eine gewisse Reduzierung des Fadings ergibt sich, je nach konkretem Verbindungsszenario, auch durch eine größere Empfangsapertur. Diese ist aber offensichtlich nicht dynamisch anpassbar und fließt daher eher ins Basisdesign des Gerätes ein, wobei sich hier aber auf Grund der Forderung nach Kompaktheit des Terminalgeräts Einschränkungen ergeben.

Was die bei den Terminals des Systems nach der vorliegenden Erfindung einzusetzende Ausrichtemechanik betrifft, so muss die Terminalapertur mit einer Präzision von unter 1 mrad auf das Terminal des jeweiligen Kommunikationspartners ausgerichtet werden, um von den Vorteilen der optischen Kommunikation, nämlich einer hohen Empfindlichkeit, einer hohen Empfangsintensität und einem geringen Signalverteilungswinkel, profitieren zu können. Gleichzeitig ist ein möglichst großer Raumwinkelbereich (Field-of-Regard; FoR) des Terminals abzudecken. Eine robuste Bauweise der Ausrichtemechanik ist im Feldeinsatz ebenfalls erforderlich.

Der Sende-Datenpfad und der Empfangs-Datenpfad verlaufen in vorteilhafter Weise in einer multimodigen Glasfaser, wobei im Terminal beide Richtungen, also die Senderichtung und die Empfangsrichtung, durch einen Y-Faser-Koppler getrennt werden. Entsprechende Bauformen sind in der bereits erwähnten deutschen Patentanmeldung 10 2005 000 937.9 erwähnt. Als weitere Bauformen sind auch konzentrische Strukturen anwendbar, wobei das Sende-Faserende in der Mitte angeordnet ist, umgeben von einem Ring von InGaAs-Datendetektor-Photodioden für den Empfangspfad.

Während der sogenannten Akquisitionsphase, die im System nach der vorliegenden Erfindung zum Aufbau der Kommunikationsverbindung dient, müssen sich zwei Kommunikationspartner mit ihren Terminals zunächst finden. Hierbei kann das Terminal mittels des großen Field-of-View (FoV) des Vierquadrantensensors, also dem Raumwinkelbereich, den das Terminal zu einem Zeitpunkt mit seinem optischen Sensor einsieht und der ca. 10° betragen kann, aber auch erheblich größer sein kann, schnell auf ein optisches Beacon-Signal reagieren, das vom Terminal eines Kommunikationspartners ausgeht. Beim Beacon-Signal handelt es sich typischerweise um ein gepulstes Signalisierungslicht. Schwieriger ist es dagegen, dieses Beacon-Signal in den sogenannten Unsicherheitswinkelbereich (Field-of-Uncertainty; FoUC) auszusenden, also in den Raumwinkelbereich, in dem sich das Terminal des Kommunikationspartners befinden kann und der normalerweise identisch mit dem sogenannten Field-of-Regard (FoR) ist, also dem Raumwinkelbereich, den das Terminal mit seiner Ausrichtmechanik abdecken kann. Hierzu kann unter anderem der Unsicherheitsbereich (FoUC) mit der Beacon-Quelle, welche mit der Datenquelle identisch sein kann, abgetastet werden. Um hierbei akzeptable Zeiten für das Beleuchten des gesamten Field-of-Regard (FoR) zu erreichen, ist entweder eine sehr schnelle mäander- oder spiralförmige Bewegung über das gesamte Field-of-Regard (FoR) mit dem Datenlaser mit dessen enger Sendedivergenz von wenigen 100 µrad erforderlich oder die Sendedivergenz wird für die Akquisitionsphase mittels entsprechender, in den Strahlengang einzubringender Optikelemente erhöht.

Eine andere diesbezügliche Methode besteht in der Einrichtung einer separaten Beacon-Quelle mit einem Divergenzwinkel, welcher dem Field-of-Regard (FoR) entspricht. Damit kann dieses ganze Field-of-Regard (FoR) mit einem Blinksignal ausgeleuchtet und auf diese Weise eine extrem schnelle Akquisition erzielt werden. Allerdings wäre hierzu eben eine separate Beacon-Quelle erforderlich.

Es ist selbstverständlich, dass bei entsprechender Auslegung des Field-of-View (FoV) und der Trackingregelung eine derartige Terminalbeschaffenheit auch für den mobilen Einsatz, z.B. auf Bodenfahrzeugen oder von Personen getragen, geeignet ist.

Um die Akquisitionszeiten und damit die Ansprüche an den dabei abzuscannenden FoUC-Bereich zu verringern, kann eine initiale manuelle Grobausrichtung durch den Nutzer erfolgen, wobei sich die Suchzeiten bei in axial beginnendem spiralförmigem Suchmuster reduzieren. Eine andere Methode zur Reduzierung der Suchzeiten besteht in der Vorgabe der GPS-Position des Partnerterminals. Nach erfolgter Akquisition verfolgen sich die Terminals auch bei Bewegung gegenseitig autonom, so dass kein weiteres manuelles Eingreifen erforderlich ist.

Vorteilhafte und zweckmäßige Weiterbildungen des Systems nach der vorliegenden Erfindung sind in den sich unmittelbar oder mittelbar auf den Patentanspruch 1 rückbeziehenden Unteransprüchen angegeben.

Eine vorteilhafte Verwendungsmöglichkeit des Systems nach der Erfindung besteht bei der Kommunikation zwischen mobilen Bodenstationen, insbesondere zwischen räumlich verteilten Truppen- oder Polizeieinheiten.

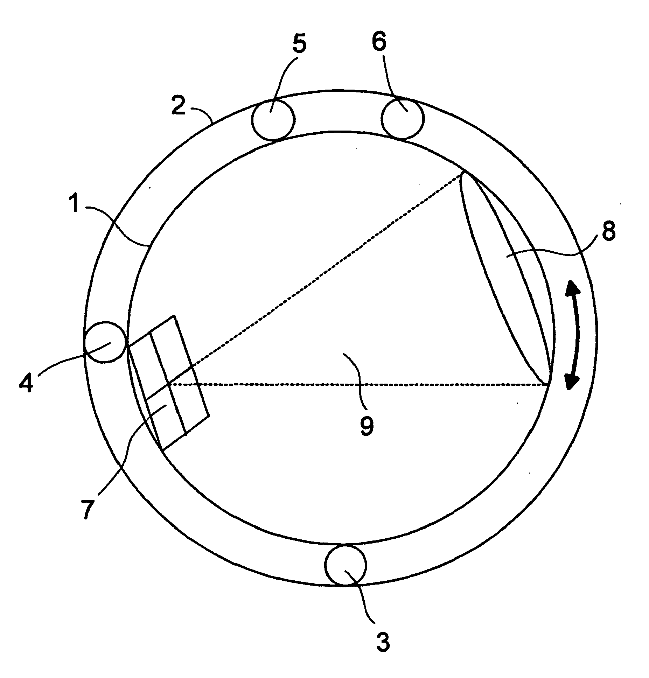

Die Erfindung wird im Folgenden anhand eines in einer Figur schematisch dargestellten Ausführungsbeispiels erläutert. Die beigefügte Figur zeigt eine Prinzipdarstellung des mechanischen und optischen Aufbaus eines vorteilhaften Ausführungsbeispiels eines nomadischen Terminals für ein System entsprechend der vorliegenden Erfindung.

Eine typische Auslegung von Optik und Mechanik kann folgende spezifische Merkmale aufweisen:
Field-of-View (FoV) → 10°;
Brennweite → 100 mm;
"PAT"-Sensordurchmesser → 17 mm; und
Vierquadranten-InGaAs-"PAT"-Detektor mit 100 kHz Bandbreite.

Was den Mechanikaufbau des Terminals angeht, so besteht dieser aus zwei konzentrischen Kugeln 1 und 2, von denen die innere Kugel 1 mittels zweier orthogonal angeordneter Drehräder, die in einem Antriebslager-X 3 bzw. in einem Antriebslager-Y 4 gelagert sind, in den beiden Drehachsen X und Y gegenüber der äußeren Kugel 2 gedreht werden kann. Zwischen der inneren Kugel 1 und der äußeren Kugel 2 sind zur korrekten Führung noch Gegenlager 5 und 6 vorgesehen. Die vier Lagerpunkte brauchen sinnvollerweise nicht - wie in der Figur dargestellt - in einer Ebene liegen. Es sind auch andere Mechaniken denkbar, wie beispielsweise eine kardanische Aufhängung. Die eine äußere Hülle bildende, äußere Kugel 2 ist nur für die Kommunikationswellenlänge, z.B. 1550 nm, optisch transparent. Der restliche Spektralbereich dagegen wird durch die äußere Kugel 2 nicht transmittiert, womit sich eine starke Reduzierung des Hintergrundlichtes ergibt.

Als Werkstoff für die äußere Kugel 2 kann beispielsweise ein Kunststoffmaterial mit entsprechenden optischen Eigenschaften oder entsprechend beschichtetes optisches Glas verwendet werden. Die äußere Kugel 2 dient außerdem zum mechanischen Schutz bzw. als Staubschutz des Terminalsystems und eben zur mechanischen Aufhängung und zugleich als Gehäuse.

Der vorzugsweise als Vierquadranten-InGaAs-"PAT"-Detektor mit 100 kHz Bandbreite ausgeführte "PAT"-Sensor 7 für das Such-, Akquisitions- und Strahlverfolgungsverfahren liegt in einem Randbereich innerhalb der inneren Kugel 1 diametral gegenüberliegend zu einer Aperturlinse 8. In der Figur ist ein Strahlengang 9 zwischen der Aperturlinse 8 und dem "PAT"-Sensor 7 schematisch dargestellt.

Nach den vorher angegebenen Merkmalszahlen hätte damit das in der Figur dargestellte kugelförmige Terminal einen Durchmesser von nur etwa 14 cm bei einem Empfangsaperturlinsendurchmesser von etwa 5 cm.

Auflistung und Erläuterung der im beschreibenden Text benutzten Bezugszeichen, Abkürzungen und Begriffe:
- FoR: Field-of-Regard, Raumwinkelbereich, den das Terminal mit seiner Ausrichtmechanik abdecken kann
- FoUC: Field of Uncertainty; Raumwinkelbereich, in dem sich der Kommunikationspartner befinden kann
- FoV: Field-of-View; Raumwinkelbereich, den das Terminal zu einem Zeitpunkt mit seinem optischen Sensor einsieht
- Gbps: Giga-Bit pro Sekunde
- InGaAs: Indium-Gallium-Arsenid, Halbleitermaterial für optische Detektoren im Mid-Infrared (MIR);
- MIR: Mid-Infrared (ca. 1 µm bis 2 µm);
- NIR: Near-Infrared (ca. 750 nm bis 1 µm);
- "PAT": Pointing, Acquisition, and Tracking; Such-, Akquisitions- und Strahlverfolgungsverfahren.

- 1: Innere Kugel
- 2: Äußere Kugel
- 3: Antriebslager-X
- 4: Antriebslager-Y
- 5: Gegenlager
- 6: Gegenlager
- 7: "PAT"-Sensor für Suche, Akquisition und Verfolgung
- 8: Aperturlinse
- 9: Strahlengang

## Patentansprüche

1. System zur optischen Freiraum-Datenübertragung zwischen Kommunikationspartnern, die zum Aussenden und Empfangen eines mit Daten modulierten optischen Strahls jeweils ein in einem Gehäuse untergebrachtes, mit einer Wellenlänge größer als 1200 nm arbeitendes, bewegliches Terminal aufweisen, das zur Ausrichtungseinstellung der Strahlrichtung für den Sende- und Empfangspfad mit einer Einrichtung zur Durchführung eines integrierten, autonomen Pointing- und Tracking-Verfahrens ausgelegt ist, wobei zwischen kommunizierenden Terminals eine Telemetrie-Kommunikation vorgesehen ist, **dadurch gekennzeichnet, dass** folgende Auslegung der Mechanik und Optik der für den Sende- und Empfangspfad jeweils eine gemeinsame Terminalapertur aufweisenden, von mobilen Kommunikationspartnern mitführbaren Terminals vorgesehen ist:
zwei konzentrische Kugeln (1, 2), von denen die innere Kugel (1) mittels zweier in Antriebslagern (3, 4) orthogonal angeordneter Drehräder oder mittels anders ausgebildeter Drehmechaniken in beiden Drehachsen (X, Y) gegenüber der äußeren Kugel (2) rotierbar ist und von denen die äußere Kugel (2) nur für die Kommunikationswellenlänge transparent ist, der restliche Spektralbereich dagegen nicht transmittiert wird; ein zur Durchführung des Pointing- und Tracking-Verfahrens und zusätzlich eines Akquisitionsverfahrens vorgesehener Pointing, Acquisition and Tracking PAT, also Such-, Akquisitions- und Strahlverfolgungssensor (7) in einem Randbereich innerhalb der inneren Kugel (1) und dazu diametral gegenüberliegend eine Aperturlinse (8),
und dass die Telemetrie-Kommunikation zwischen kommunizierenden Terminals in den Nutzer-Datenstrom eingebunden ist und bei Auftreten von Leistungsfading Gegenmaßnahmen abstimmt.

2. System nach Anspruch 1, **dadurch gekennzeichnet, dass** das zur Strahl-Ausrichtungseinstellung in den Terminals verwendete integrierte, autonome Such-, Akquisitions- und Strahlverfolgungsverfahren PAT auf bildgebenden Sensoren oder auf einer Verwendung von Mehrsegment-Sensoren beruht.

3. System nach Anspruch 1 oder 2, **dadurch gekennzeichnet, dass** zur Durchführung des integrierten, autonomen Such-, Akquisitions- und Strahlverfolgungsverfahren PAT dasselbe Datensignal wie für die Datenübertragung verwendet wird.

4. System nach Anspruch 3, **dadurch gekennzeichnet, dass** ein Teil des Empfangslichts von einem Datenempfangspfad zu einem eigenen Such-, Akquisitions- und Strahlverfolgungspfad ausgekoppelt wird.

5. System nach Anspruch 3, **dadurch gekennzeichnet, dass** für den Datenempfang und für die Durchführung des Such-, Akquisitions- und Strahlverfolgungsverfahrens PAT dieselben Sensoren verwendet werden.

6. System nach Anspruch 3, **dadurch gekennzeichnet, dass** die für den Datenempfang vorgesehenen Sensoren überstrahlt werden und seitlich daneben angeordnete Tracking-Sensoren mit dem erforderlichen Lichtsignal bestrahlt werden.

7. System nach Anspruch 3, **gekennzeichnet durch** eine Überwachung der Empfangsleistung des für den Datenempfang vorgesehenen Sensors.

8. System nach einem der vorhergehenden Ansprüche, **gekennzeichnet durch** eine Kommunikation zwischen den Terminals mittels synchroner, kontinuierlicher, bidirektionaler Datenströme oder mittels asynchroner paketierter Daten.

9. System nach Anspruch 8, **dadurch gekennzeichnet, dass** bei Kommunikation zwischen den Terminals mittels asynchroner paketierter Daten eine Kommunikation im Halb-Duplex-Verfahren vorgesehen ist.

10. System nach Anspruch 9, **dadurch gekennzeichnet, dass** eine asymmetrisch, hinsichtlich ihrer Dauer ungleiche Sende- und Empfangsperioden aufweisende Gestaltung des Wechsels der Übertragungsrichtung vorgesehen ist.

11. System nach Anspruch 9 oder 10, **gekennzeichnet durch** einen derart schnellen Wechsel der Übertragungsrichtung, dass die für das Such-, Akquisitions- und Strahlverfolgungsverfahren PAT zuständigen Sensoren stets ausreichend mit einem Such-, Akquisitions- und Strahlverfolgungssignal versorgt sind.

12. System nach einem der vorhergehenden Ansprüche, **dadurch gekennzeichnet, dass** die Bandbreite zur Durchführung des Such-, Akquisitions- und Strahlverfolgungsverfahrens PAT durch die Vibrationen und Lageungenauigkeiten der das Terminal tragenden Trägerplattform und durch die atmosphärischen Brechungsindexstörungen im Raum zwischen den beiden jeweils kommunizierenden Terminals bestimmt ist.

13. System nach einem der Ansprüche 9 bis 11, **dadurch gekennzeichnen, dass** das Such-, Akquisitions- und Strahlverfolgungsverfahren PAT auf einen modulierten Beacon ausgelegt ist, so dass die Such-, Akquisitions- und Strahlverfolgungssensoren auf ein mit einer Blinkfrequenz gepulstes Signal und nicht auf ein kontinuierliches Signal des Beacons nachgeführt werden, wobei die Blinkfrequenz des Beacons der Halb-Duplex-Wechselfrequenz entspricht.

14. System nach Anspruch 1, **dadurch gekennzeichnet, dass** als abgestimmte Gegenmaßnahme in Betracht kommen:
- Reduzierung der Kanaldatenrate;
- Erhöhung des Codierungsoverheads zur Datensicherung;
- kurzzeitige Erhöhung der Sendeleistung, soweit dies die Reserven erlauben; und
- Wiederholungsanforderungen für abhanden gekommene Datenpakete, wie beim Standard-Kommunikationsprotokoll oder englisch Transport Control Protocol TCP üblich.

15. System nach einem der vorhergehenden Ansprüche, **gekennzeichnet durch** folgende Auslegung der Optik eines Terminals:
- etwa 10° Betrachtungsfeld oder englisch Field-of-View FoV, das ist der zu einem Zeitpunkt vom PAT-Sensor eingesehene Raumwinkelbereich, den das Terminal ohne Bewegung seiner Ausrichtmechanik abdeckt;
- etwa 100 mm Brennweite;
- etwa 17 mm Durchmesser der Such-, Akquisitions- und Strahlverfolgungssensoren; und
- Vierquadranten-InGaAs-PAT-Such-, Akquisitions- und Strahlverfolgungsdetektor mit etwa 100 kHz-Bandbreite.

16. System nach Anspruch 1, **dadurch gekennzeichnet, dass** die äußere Kugel (2) aus Kunststoffmaterial oder aus beschicktetem optischen Glas mit entsprechenden optischen Eigenschaften besteht und zum mechanischen Schutz und Staubschutz des Systems und zur mechanischen Aufhängung der inneren Kugel (1) und als Gehäuse des Terminals dient.

17. System nach Anspruch 1 und 15, **dadurch gekennzeichnet, dass** die äußere Kugel (2) und damit zugleich das kugelförmige Terminal einen Durchmesser von nur etwa 14 cm bei etwa 5 cm Empfangsaperturdurchmesser hat.

18. System nach einem der vorhergehenden Ansprüche, **dadurch gekennzeichnet, dass** der Sende- und Empfangs-Datenpfad in einer multimodigen Glasfaser verläuft, wobei zur Trennung der beiden Übertragungsrichtungen ein Y-Faser-Koppler vorgesehen ist, oder in einer konzentrischen Glasfaserstruktur verläuft, wobei das Sende-Faserende in der Mitte liegt, umgeben von einem Ring von InGaAs-Datendetektor-Photodioden für den Empfang.

19. System nach Anspruch 1, **dadurch gekennzeichnet, dass** für die Akquisitionsphase beim Aufbau einer Kommunikationsverbindung zwischen den Terminals zweier Kommunikationspartner die Sendedivergenz mittels in den Strahlengang einzubringender Optikelemente in dem Maße erhöht wird, dass diese dem Betrachtungsfeld oder englisch Field-of-Regard FoR, entspricht, so dass dieses ganze Betrachtungsfeld, das dem Raumwinkelbereich entspricht, den das Terminal mit seiner Ausrichtmechanik abdeckt, ausgeleuchtet wird.

20. System nach Anspruch 1, **dadurch gekennzeichnet, dass** für die Akquisitionsphase beim Aufbau einer Kommunikationsverbindung zwischen den Terminals zweier Kommunikationspartner eine schnelle mäander- oder spiralförmige Bewegung der auch als Beacon-Quelle wirksamen Datenlaserquelle mit deren engen Sendedivergenz von wenigen 100 µrad vorgesehen ist, wobei sich die Abtastbewegung über einen Unsicherheitswinkelbereich oder englisch Field-of-Uncertainty FoUC erstreckt, welcher dem Raumwinkelbereich, in dem sich das Terminal des Kommunikationspartners befinden kann, entspricht und der normalerweise mit dem Raumwinkelbereich oder englisch Field-of-Regard FoR, den das Terminal mit seiner Ausrichtmechanik abdeckt, identisch ist, so dass dieser ganze Raumwinkelbereich systematisch und schnell ausgeleuchtet wird.

21. System nach Anspruch 1, **dadurch gekennzeichnet, dass** für die Akquisitionsphase beim Aufbau einer Kommunikationsverbindung zwischen den Terminals zweier Kommunikationspartner im Terminal eine separate blinkende Beacon-Quelle mit einem Divergenzwinkel vorgesehen ist, welcher dem Betrachtungsfeld oder englisch Field-of-Regard FoR entspricht, so dass dieses ganze Betrachtungsfeld, das dem Raumwinkelbereich entspricht, den das Terminal mit seiner Ausrichtmechanik abdeckt, mit einem Blinksignal ausgeleuchtet wird.

22. System nach einem der Ansprüche 19 bis 21, **gekennzeichnet durch** eine initiale manuelle Grobeinstellung **durch** den Nutzer oder eine Vorgabe der Position des Terminals des Kommunikationspartners.

## Claims

1. A system for data transmission in optical free space between communication parties, each comprising a mobile terminal for the transmission and reception of a data modulated optical beam, accommodated in a housing and operating with a wavelength larger than 1200 nm, said terminal being configured for orientation adjustment of the beam direction for the transmission and reception paths with means for performing an integrated autonomous pointing and tracking method, wherein telemetry communication is provided between communicating terminals, **characterized in that** the terminals, respectively having a common terminal aperture for the transmission and reception paths and being adapted to be carried along by mobile communication parties, are provided with the following mechanical and optical configuration:
two concentric spheres (1, 2), of which the inner sphere (1) is rotatable with respect to the outer sphere (2) in both axes of rotation (X, Y) by means of two rotating wheels orthogonally arranged in drive bearings (3, 4) or by means of differently configured rotation mechanisms, and of which the outer sphere (2) is transparent only to the communication wavelength, whereas the rest of the spectral range is not transmitted;
a pointing, acquisition and tracking (PAT) sensor (7) located in a peripheral portion within the inner sphere (1) for performing the pointing and tracking method and, in addition, an acquisition method, and an aperture lens (8) diametrically opposite said sensor,
and that the telemetry communication between communicating terminals is integrated in the user data stream and synchronizes countermeasures in the event of power fading.

2. The system of claim 1, **characterized in that** the integrated autonomous pointing, acquisition and tracking (PAT) method, used in the terminals for adjusting the orientation of the beam, is based on imaging sensors or on the use of multi-segment sensors.

3. The system of claim 1 or 2, **characterized in that** the same data signal used for data transmission is used for performing the integrated autonomous pointing, acquisition and tracking (PAT) method.

4. The system of claim 3, **characterized in that** a part of the reception light is coupled out from a data reception path to a dedicated pointing, acquisition and tracking path.

5. The system of claim 3, **characterized in that** the same sensors are used for data reception and for performing the pointing, acquisition and tracking (PAT) method.

6. The system of claim 3, **characterized in that** the sensors provided for data reception are blanketed and tracking sensors arranged laterally thereof are irradiated with the required light signal.

7. The system of claim 1, **characterized by** the monitoring of the reception power of the sensor intended for data reception.

8. The system of one of the preceding claims, **characterized by** communication between the terminals via synchronous, continuous, bidirectional data streams or via asynchronous packaged data.

9. The system of claim 8, **characterized in that** communication according to a half-duplex method is provided for communication between terminals using asynchronous data.

10. The system of claim 9, **characterized in that** an asymmetric scheme of change of the transmission direction is provided, said scheme having transmission and reception periods of different length.

11. The system of claim 9 or 10, **characterized by** such a rapid change of the transmission direction that the sensors for the pointing, acquisition and tracking (PAT) method are always sufficiently supplied with a pointing, acquisition and tracking signal.

12. The system of one of the preceding claims, **characterized in that** the bandwidth for performing the pointing, acquisition and tracking (PAT) method is determined by the vibrations and positional inaccuracies of the support platform carrying the terminal and by the atmospheric interferences with the refraction index in the space between the two respective communicating terminals.

13. The system of one of claims 9 to 11, **characterized in that** the pointing, acquisition and tracking (PAT) method is configured to a modulated beacon, so that the pointing, acquisition and tracking sensors track a signal pulsed with a intermittent frequency and not a continuous signal of the beacon, the intermittent frequency of the beacon corresponding to the half-duplex changing frequency.

14. The system of claim 1, **characterized in that** the following are contemplated as synchronized countermeasures:
- a reduction of the channel data rate;
- an increase in the coding overhead for data protection;
- a short-term increase in transmission power, as far as possible with respect to reserves; and
- repetition requests for lost data packages, as is usual in the Transport Control Protocol (TCP).

15. The system of one of the preceding claims, **characterized by** the following configuration of the optic of a terminal:
- a field of view (FOV) of approx. 10°, which is the solid angle range observed at a time by the PAT sensor and covered by the terminal without movement of its adjustment mechanism;
- a focal length of approx. 100 m;
- pointing, acquisition and tracking sensors if approx. 17 mm in diameter; and
- a 4-quadrant-InGaAs-PAT-detector of approx. 100 kHz of bandwidth.

16. The system of claim 1. **characterized in that** the outer sphere (2) is made of plastic material or coated optical glass with corresponding optical properties and serves for the mechanical protection and the dust protection of the system and for the mechanical suspension of the inner sphere (1) and as a housing for the terminal.

17. The system of claims 1 and 13, **characterized in that** the outer sphere (2), and thus also the terminal, has a diameter of only approx. 14 cm with a reception aperture diameter of approx. 5 cm.

18. The system of one of the preceding claims, **characterized in that** the transmission and reception data path extends in a multi-mode glass fiber, a Y-fiber coupler being provided to separate the two transmission directions, or that it extends in a concentric glass fiber structure, the transmission fiber end being located in the centre, surrounded by a ring of InGaAS data detector photodiodes for reception.

19. The system of claim 1, **characterized in that,** for the acquisition phase during the set-up of a communication link between the terminals of two communication parties, optic elements to be positioned in the beam path are used to increase the transmission divergence to such an extent that it corresponds to the field of regard (FoR), so that the entire field of regard that corresponds to the solid angle range covered by the adjustment mechanism of the terminal is illuminated.

20. The system of claim 1, **characterized in that,** for the acquisition phase during the set-up of a communication link between the terminals of two communication parties, a fast meandering or spiralling movement of the data laser source, which is also active as a beacon source, with its narrow transmission divergence of a few 100 µrad is provided, the scanning movement covering a field of uncertainty (FoUC) that corresponds to the solid angle range in which the terminal of the communication partner may be located and which is usually identical with the field of regard (FoR) covered by the terminal's adjustment mechanism, so that the entire solid angle range is illuminated systematically and quickly.

21. The system of claim 1, **characterized in that,** for the acquisition phase during the set-up of a communication link between the terminals of two communication parties, a separate flashing beacon source with a divergence angle is provided in the terminal, which angle corresponds to the field of regard (FoR), so that this entire field of regard that corresponds to the solid angle range covered by the terminal's adjustment mechanics is illuminated with a flashing signal.

22. The system of one of claims 19 to 21, **characterized by** an initial manual coarse adjustment by the user or a defined position of the terminal of the communication partner.

## Revendications

1. Système de transmission optique de données en espace libre entre des terminaux de communication qui, pour l'émission et la réception d'un rayon optique modulé avec des données, présentent respectivement un terminal mobile placé dans un boîtier, fonctionnant avec une longueur d'onde supérieure à 1200 nm, lequel est conçu pour le réglage de l'alignement de la direction du rayon pour le chemin d'émission et de réception avec un dispositif pour l'exécution d'un procédé de pointage et de poursuite intégré, autonome, dans lequel une communication par télémétrie est prévue entre des terminaux communiquant, **caractérisé en ce qu'**il est prévu la conception suivante de la mécanique et de l'optique des terminaux transportables par les partenaires de communication mobiles pour le chemin d'envoi et de réception présentant respectivement une ouverture du terminal commune :
deux sphères (1, 2) concentriques, desquelles la sphère interne (1) peut être tournée au moyen de deux roues pivotantes disposées de manière orthogonale dans des paliers d'entraînement (3, 4) ou au moyen d'autres mécanismes de rotation formés différemment dans les deux axes de rotation (X, Y) par rapport à la sphère externe (2), et desquelles la sphère externe (2) est transparente uniquement pour la longueur d'onde de communication, le domaine spectral restant au contraire n'est pas transmis ;
un capteur de pointage, d'acquisition et de poursuite PAT prévu pour l'exécution du procédé de pointage et de poursuite et également d'un procédé d'acquisition, c'est-à-dire un capteur de pointage, d'acquisition et de poursuite de rayon (7) dans une zone de délimitation à l'intérieur de la sphère interne (1) et une lentille d'ouverture (8) diamétralement opposée,
et **en ce que** la communication par télémétrie entre les terminaux communiquant est intégrée dans le flux de données d'utilisateur et règle des contre-mesures lors de l'apparition de chute de puissance.

2. Système selon la revendication 1, **caractérisé en ce que** le procédé de recherche, d'acquisition et de poursuite de rayon PAT intégré dans les terminaux et autonome utilisé pour le réglage de l'alignement du rayon repose sur des capteurs imageurs ou sur l'utilisation de capteurs multisegments.

3. Système selon la revendication 1 ou 2, **caractérisé en ce que,** pour l'exécution du procédé de recherche, d'acquisition et de poursuite de rayon PAT intégré, le même signal de données que pour la transmission de données est utilisé.

4. Système selon la revendication 3, **caractérisé en ce qu'**une partie de la lumière de réception est détournée depuis un chemin de réception de données vers un chemin propre de recherche, d'acquisition et de poursuite de rayon.

5. Système selon la revendication 3, **caractérisé en ce que** les mêmes capteurs sont utilisés pour la réception de données et l'exécution du procédé de recherche, d'acquisition et de poursuite de rayon PAT.

6. Système selon la revendication 3, **caractérisé en ce que** les capteurs prévus pour la réception de données sont irradiés et les capteurs de poursuite disposés latéralement à côté sont irradiés avec le signal de lumière nécessaire.

7. Système selon la revendication 3, **caractérisé par** une surveillance de la puissance de réception du capteur prévu pour la réception de données.

8. Système selon l'une quelconque des revendications précédentes, **caractérisé par** une communication entre les terminaux au moyen de flux de données synchrones, continus et bidirectionnels ou au moyen de données en paquets asynchrones.

9. Système selon la revendication 8, **caractérisé en ce** lors de communication entre les terminaux au moyen de données en paquets asynchrones, il est prévu une communication dans un procédé en semi-duplex.

10. Système selon la revendication 9, **caractérisé en ce qu'**il est prévu une conception asymétrique du changement de la direction de transmission présentant des périodes d'émission et de réception différentes du point de vue de leur durée.

11. Système selon la revendication 9 ou 10, **caractérisé par** un changement rapide de la direction de transmission, en ce que les capteurs compétents pour le procédé de recherche, d'acquisition et de poursuite de rayon PAT sont en permanence suffisamment alimentés par un signal de recherche, d'acquisition et de suivi de rayon.

12. Système selon l'une quelconque des revendications précédentes, **caractérisé en ce que** la largeur de bande pour la réalisation du procédé de recherche, d'acquisition et de poursuite de rayon PAT est déterminée par les vibrations et les imprécisions de position de la plateforme support portant le terminal et par les perturbations atmosphériques de l'indice de réfraction dans l'espace entre les deux terminaux en communication respective.

13. Système selon l'une quelconque des revendications 9 à 11, **caractérisé en ce que** le procédé de recherche, d'acquisition et de poursuite de rayon PAT est fait pour une balise modulée, de sorte que les capteurs de recherche, d'acquisition et de poursuite de rayon sont asservis à un signal pulsé avec une fréquence de clignotement et non à un signal continu de la balise, la fréquence de clignotement de la balise correspondant à la fréquence alternative semi-duplex.

14. Système selon la revendication 1, **caractérisé en ce que** les contre-mesures réglées prises en considération sont :
- une réduction du débit des données de canal ;
- une augmentation du temps de codage pour la sécurité des données ;
- une augmentation momentanée de la puissance d'émission dans la mesure où les réserves le permettent ; et
- des demandes de répétition pour les paquets de données perdues, comme d'habitude avec le protocole de communication standard ou, en anglais, Transport Control Protocol TCP.

15. Système selon l'une quelconque des revendications précédentes, **caractérisé par** la conception suivante de l'optique d'un terminal :
- un champ de visualisation d'environ 10° ou, en anglais, Field-of-View FoV, qui est la zone angulaire reconnue par le capteur PAT à un instant, qui est couverte par le terminal sans déplacement de sa mécanique d'alignement ;
- une focale d'environ 100 mm ;
- un diamètre d'environ 17 mm des capteurs de recherche, d'acquisition et de poursuite de rayon ; et
- des capteurs InGaAs-PAT, de recherche, d'acquisition et de poursuite de rayon à quatre quadrants avec une largeur de bande d'environ 100 kHz.

16. Système selon la revendication 1, **caractérisé en ce que** la sphère externe (2) est constituée de matière plastique ou de verre optique revêtu présentant des propriétés optiques appropriées et sert à la protection mécanique et à la protection contre la poussière du système et à la suspension mécanique de la sphère interne (1) et de boîtier pour le terminal.

17. Système selon les revendications 1 et 15, **caractérisé en ce que** la sphère externe (2) et donc en même temps le terminal sphérique ont un diamètre d'environ 14 cm seulement pour un diamètre d'ouverture de réception d'environ 5 cm.

18. Système selon l'une quelconque des revendications précédentes, **caractérisé en ce que** le chemin d'émission et de réception de données passe dans une fibre de verre multimodale, un coupleur à fibres optiques Y étant prévu pour la séparation des deux sens de transmission, ou dans une structure concentrique à fibres de verre, l'extrémité des fibres d'émission se trouvant au centre, entourée par un anneau de photodiodes de détecteurs de données InGaAs pour la réception.

19. Système selon la revendication 1, **caractérisé en ce que,** pour la phase d'acquisition lors de l'établissement d'une liaison de communication entre les terminaux de deux partenaires de communication, la divergence d'émission est augmentée à l'aide d'éléments optiques à insérer dans la trajectoire des rayons dans une proportion telle que celle-ci corresponde au champ de visualisation ou, en anglais, Field-of-Regard FoR, afin que ce champ de visualisation entier, qui correspond à la zone angulaire qui est couverte par le terminal avec sa mécanique d'alignement, soit éclairé.

20. Système selon la revendication 1, **caractérisé en ce que,** pour la phase d'acquisition lors de l'établissement d'une liaison de communication entre les terminaux de deux partenaires de communication, il est prévu un déplacement rapide en forme de méandre ou de spirale de la source laser de données fonctionnant également comme source de balise avec sa divergence d'émission étroite de quelque 100 µrad, le déplacement de balayage s'étendant sur une zone angulaire d'incertitude ou, en anglais, Field of-uncertainty FoUC, qui correspond à la zone angulaire dans laquelle peut se trouver le terminal du partenaire de communication et qui est normalement identique à la zone angulaire ou, en anglais, Field-of-Regard FoR, qui est couverte par le terminal avec sa mécanique d'alignement, de sorte que toute cette zone angulaire soit systématique et rapidement éclairée.

21. Système selon la revendication 1, **caractérisé en ce que,** pour la phase d'acquisition lors de l'établissement d'une liaison de communication entre les terminaux de deux partenaires de communication, il est prévu dans le terminal une source de balise clignotante séparée avec un angle de divergence qui correspond au champ de visualisation ou, en anglais, Field-of-Regard FoR, de sorte que tout ce champ de visualisation, qui correspond à la zone angulaire qui est couverte par le terminal avec sa mécanique d'alignement, soit éclairé par un signal clignotant.

22. Système selon l'une quelconque des revendications 19 à 21, **caractérisé par** un réglage initial manuel grossier de l'utilisateur ou par une prédéfinition de la position du terminal du partenaire de communication.
